# EUROPEAN PATENT SPECIFICATION

(11) **EP 0 495 614 B1**
(45) Date of publication and mention of the grant of the patent: **20.05.1998**
(21) Application number: 92300288.5
(22) Date of filing: 14.01.1992
(51) Int. Cl.: B29C 45/17

(54) **Method of injection molding a thermoplastic resin and a mold for injection molding**
Verfahren zum Spritzgiessen eines thermoplastischen Kunststoffes und Spritzgiessform
Procédé pour mouler par injection une matière thermoplastique et moule d'injection

(30) Priority: 14.01.1991 JP 15939/91; 26.04.1991 JP 123035/91
(43) Date of publication of application: 22.07.1992
(73) Proprietor: NIPPON STEEL CHEMICAL CO., LTD., Tokyo (JP)
(72) Inventor: Aida, Hiroshi, Kawasaki-shi Kanagawa-ken (JP); Hazawa, Ryohei, Koto-ku, Tokyo (JP)
(74) Representative: Shindler, Nigel

(56) References cited:
- FR-A- 2 125 300
- PATENT ABSTRACTS OF JAPAN vol. 7, no. 250 (M-254)(1395) 8 November 1983 & JP-A-58 136 423 (YUUKICHI KOBAYASHI) 13 August 1982
- PATENT ABSTRACTS OF JAPAN vol. 9, no. 34 (M-357)(1757) 14 February 1985 & JP-A-59 176 026 (NIHON PURASUTO K.K.) 25 March 1983

## Description

The present invention relates to a method of injection-molding a thermoplastic resin into a molding and a mold for the injection molding, and more particularly to a method of molding the resin into a mold having sections which are different in thickness, without generating defects such as sink marks which are caused by shrinkage of resin.

When thermoplastic resin is injection-molded into an article having heavy [thick] sections and thinner sections, the mold is filled with resin and during the cooling process the resin at the heavy section solidifies later than the resin at the thinner section.

Consequently, shrinkage of the resin occurs mainly in the heavy section's resin, which often causes defects such as sink marks, deformations and other defects on the surfaces of the heavy sections. The sink marks, deformations, and other defects (which are referred to as sink marks hereinafter) cause the value of the article to be considerably reduced. By the conventional injection-molding method, in order to compensate for the shrinkage, a "dwell-time" is allowed immediately after the completion of the filling of the mold with resin. Accordingly the pressure is maintained for a short time after the filling of the resin, so as to prevent sink marks from being generated. However, when an article having a complicated shape is molded, the gates are likely to solidify before the dwell-time has elapsed. Therefore, an article having a satisfactory appearance cannot be obtained.

Japanese Patent Application Publication 61-53208, Japanese Patent Application Laid Open 63-268611 and 64-63122 disclose methods for suppressing a generation of surface defects by supplying gas through the resin passageway at a high pressure to make a hollow in the heavy sections and holding the resin under the pressure. However, when an article having a complicated shape is molded, a sufficient hollow is not formed in the article, causing surface defects such as sink marks. In addition, the gas passages serve as flow leaders for the molten resin, so defects such as air traps and flow marks may be easily generated on the surface of the article. In an extreme case, high pressure gas blows out from the article. Therefore, the range of articles which can be produced is limited in shape. Furthermore, it is not easy to handle the high pressure gas.

As another method, it is known to apply a pressure to the heavy sections from the back side of the article after the filling of resin. There are two pressures applying modes. In one mode, a part of the mold is arranged to be movable and pressed against the article by the hydraulic ram. The other mode is characterised by directly pressuring the article with gas from the rear surface of the heavy sections (Japanese Patent Application Publication 61-9126). However, the former method requires a mold with a complicated structure or special type of molding machine. The latter method also causes irregular sink marks on the back side of the product, resulting in considerable reduction in the value of the article.

Meanwhile, when the resin such as polycarbonate and polymethyl-methacrylate having a high setting speed are injection-molded, the surface layers are cooled and solidified quickly, and they will be strong enough to hold the internal stress of shrinkage. Consequently, voids will form inside of the molding. Accordingly sink marks are not formed on the surface of the heavy sections.

This generation of the void has been regarded as a defect causing the strength of the article to decrease. However positive use of the void to prevent the sink marks is disclosed in Japanese Patent Application Publication 2-13886. In this method, a void control member is projected into the cavity where sink marks are apt to generate. The void control member acts to induce a void in the resin at the portion near the end of the member, thereby preventing sink marks. This method is effective since sink marks can be prevented by simple means.

However, to the form the voids in the molding, the mold has some portions which are difficult to be cooled. Namely, the void control members must have a large heat capacity and a high temperature. Accordingly, it is difficult to make the void control members smaller in size. As a result, it is restricted to locate the void inducing members at the desirable positions in the mold, and hence it is difficult to form the void in all of the necessary portions in the molding. In addition, positions generating sink marks change irregularly affected by the molding conditions. Furthermore, in some resins such as polyacetal, voids to compensate the shrinkage cannot be generated sufficiently. Therefore, generation of sink marks cannot be prevented sufficiently.

Japanese Patent Application Publication 48-41264 discloses a method of injection-molding where a nozzle is projected into a cavity of a mold and gas is supplied into a resin in the cavity from a tip end of the nozzle at a high pressure before solidification of the resin, passing through a passage formed in the axis of the nozzle. However, since the method also uses a high pressure gas, it is difficult to control the pressure to form a preferable void. In addition, the nozzle can be trapped by the shrinkage force of the solidified resin. Therefore, the nozzle cannot be smoothly removed from the resin.

From FR-A-2125300, a method of molding an object having a large volume, such as the heel of a shoe, is known. The molten resin is injected into the mold and is followed up by the injection of compressed air into the centre of the mold to form a central cavity and the resin is spread to an approximately uniform thickness over the walls of the mold.

In JP-A-58136423 a method of molding an article, such as a soup bowl, is disclosed. The object is to lighten the article to be molded by forming a hollow cavity within the wall thickness of the article. After molten resin has been injected into the mold, compressed air is injected through an air needle into the uncured resin where the cavity is to be formed and the resin at that region is pressed against the inner wall of the mold to form the cavity.

EP-A-289230 discloses a method of injection molding in which molten resin is injected into the mold cavity to completely fill the cavity and during the cooling process, pressurised gas is introduced into the resin. The gas is introduced at a region of thicker wall section and the pressure is maintained so that the resin is held positively against the mould surface to take up the shrinkage of the resin at that region.

An object of the present invention is to provide a method for making a thermoplastic part having thick and thin wall portions and in which sink marks, are avoided.

According to a first aspect of the present invention there is provided an injection molding method for manufacturing a thermoplastic part having thick and thin wall portions and having a surface appearance which is free from sink marks, said method comprising the steps of: providing for the or each thick wall portion at least one void inducing member having an acute tip at one end thereof, said member being positioned corresponding to the thick wall portion such that the tip is located in the cavity of the mold;
injecting molten resin into the cavity in an amount sufficient to fill the cavity;
supplying compressed gas along the periphery of the or each void inducing member to the acute tip thereof thereby causing a resin skin layer formed in contact with the acute tip to be penetrated by said gas and a void nucleus to be induced in the molten resin and
cooling and solidifying the resin causing the void nucleus to expand with the ingress of gas to a large void in response to volumetric shrinkage of the resin by the shrinkage force of the resin.

The application of gas pressure may be performed either immediately after the filling of the entire cavity with resin or may be performed with the above descried dwell-time. By this dwell process, the decrease in the charge pressure caused by the counter flow of the injected resin from a cavity can be also prevented.

According to a second aspect of the invention a mold for injection molding a thermoplastic part having thick and thin wall portions and having a surface appearance which is free from sink marks, said mold having a cavity for defining the profile of the thermoplastic part;

for the or each thick wall portion at least one void inducing member, the member being positioned corresponding to the thick wall portion such that an acute tip at one end of the member is located in the cavity of the mold and passage means for supplying gas under pressure along the periphery of the member to the tip thereof.

The cavity of the mold is charged fully with the injected resin, and gas pressure is applied to the resin through the void inducing member immediately or after dwelling. As the molding starts to cool the residual filling pressure within the molding falls to zero and quickly becomes negative. At that time, the gas pressure is applied to the resin by way of the void inducing members, the gas breaks through the skin layer being formed around the tip end of the void inducing members to form microscopic foam in the molten resin as a nucleus for the void. Even if the application of the gas pressure is stopped after the void nucleus has been once formed, the void nucleus progressively develops to voids by the shrinkage force along with the cooling and solidification of the surrounding molten resin. Thus, by compensating the shrinkage forces one after another, the voids generated as a nucleus continues to develop until they becomes large enough to prevent sink marks from generating. In this way, sink marks do not generate not only around the void inducing members, but also all over the heavy sections. If the gas application is continued, the gas pressure is added to the shrinkage force, thereby enhancing the development of the void. As a result, sink marks are not formed on the heavy sections, but also around the thinner sections or on the adjacent thinner sections.

When a void inducing member having a projected tip end is used, gas pressure application is concentrated in the tip end, thereby easily forming a void nucleus as well as enhancing the repeatability of generating a void at optional positions. The diameter of the hole formed in the skin layer which is being formed at the tip end of void inducing member(s) is approximately 0.5 mm which is hardly distinguishable, so that the appearance of the product is not injured. The diameter of the void inducing member, though not limited particularly, is required to be 1 mm or over preferably 1 to 10 mm, more preferably 1 to 5 mm taking the strength into account. It is sufficient that the position of the end of the void inducing member(s) is in the heavy sections of the cavity, and not necessarily in its center. Furthermore, the location for mounting the void inducing members is not limited in particular, which can be built at any convenient place in respect of designing the product. Sufficient effect, will be obtained even if it is set at the end of heavy sections. Since it is not necessary to increase heat capacity of the void inducing member(s), and not to locate the void inducing member(s) at limited positions where sink marks are easily formed, as is desclosed in Japanese Patent Publication 2-13886, the freedom in designing a product becomes uncomparatively high. If the void inducing member is so designed that gas pressure concentrates effectively at an end thereof, it is not necessary to have the shape of cylindrical rod.

The gas pressure to be used can be approximately 5 to 14.71 Bar (15 kg/cm²) which is much lower than the pressure used in the hollow in the heavy sections disclosed in Japanese Patent Publication 61-53208. In most cases, the air pressure of 9.8 Bar (10 kg/cm²) or less will be sufficient and its supply source can be easily obtained. Such a low pressure gas can be easily obtained by an ordinary operating system. The gas pressure necessary for forming a hollow in heavy sections by the methods disclosed in Japanese Patent Publications 57-14968 and 61-53208 is 147.1 Bar (150 kg/cm²). In the method of the present invention, as it is not necessary to use such a high-pressurized nitrogen gas as 147.1 Bar (150 kg/cm²) required for forming a hollow in heavy sections by the methods disclosed in Japanese Patent Publications 57-14968 and 61-53208, no special structure in equipment nor operation conditions are needed. Therefore, sink marks do not generate even under ordinary operating conditions, enabling to obtain easily a molded article with excellent surface properties, and thus attaining inestimable superiority over the others. In the method of the present invention, although the gas has a low pressure, the development of a void is accelerated and sink marks can be effectively prevented, in particular in the resin having a strong shrinkage force. If the gas pressure application is continued during the cooling step of the resin to promote the development of the void to compensate the shrinkage of the resin, sink marks are more perfectly prevented from generating.

The gas is fed into the resin along the periphery of the void inducing member. Consequently, the gas forms a slight gap between the void inducing member and the resin. Accordingly, the void inducing member can be easily removed from the resin, unlike the method disclosed in Japanese Patent Application Publication 48-41264.

The other objects and features of this invention will become understood from the following description with reference to the accompanying drawings.

### BRIEF DESCRIPTION OF DRAWINGS

Fig. 1 is a perspective view showing an example of a complete molding;
Fig. 2 is a sectional side view of a mold using a method of the present invention;
Fig. 3 is a sectional view for explaining formation of a void nucleus;
Fig. 4 is a sectional view for explaining development of a void;
Fig. 5 is a sectional view showing another example of a mold;
Fig. 6 is a graph showing a relationship between gas pressure application time and size of the void;
Fig. 7 is a graph showing a relationship between gas pressure application start time and size of the void;
Fig. 8 is a table showing results of examples;
Fig. 9 is a perspective view showing another example of a molding having a complicated shape; and
Fig. 10 is a sectional view showing a void inducing member attaching device.

### DETAIL DESCRIPTION OF THE PREFERRED EMBODIMENTS

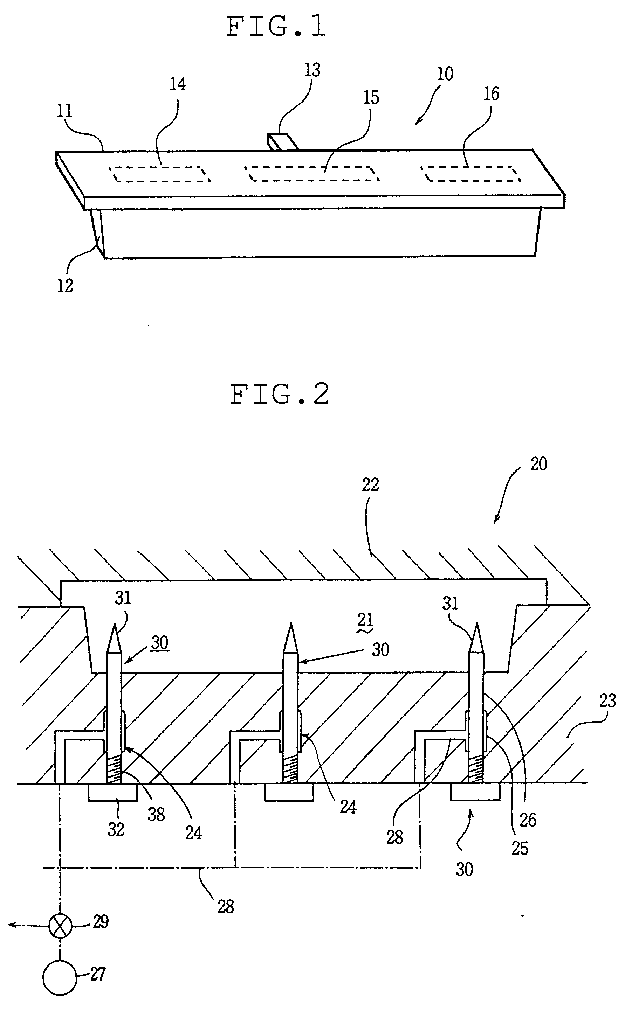

Referring to Fig. 1, the complete molding 10 has a rib 12 as a heavy section and a flange 11 as a thinner section When a thermoplastic resin is filled on the side of the flange 11, a gate 13 remains, which has been formed in a sprue of a mold, and has to be cut off to obtain an article. In an example of the molding 10, the rib has a thickness of 10 mm while the flange 11 has a thickness of 3 mm. Because of this large thickness, sink marks are liable to be formed at surface portions 14, 15 and 16 of rib 12 when molded by a conventional injection molding.

Fig. 2 shows a mold 20 for the molding 10 which comprises a fixed mold 22 and a movable mold 23 attached to the fixed mold 22 to form a cavity 21.

In accordance with the present invention, as shown in Fig. 2, void inducing members 30 are mounted in the movable mold 23. The void inducing member 30 is in the form of a rod and has an acute tip 31 and screw thread 38. The member 30 is inserted into a hole 24 formed in the movable mold 23, and the thread 38 is screwed in the movable mold 23. A flange 32 of the void inducing member 30 is abutted on the outside wall of the mold 23. The tip 31 is located at a central portion of the cavity 21. The hole 24 comprises a large diameter portion 25 around a base portion of the void inducing member 30 and a small diameter portion 26 having a diameter slightly larger than the void inducing member 30. The large diameter portion 25 is communicated with a pressurized gas source 27 through a passage 28 and a valve 29.

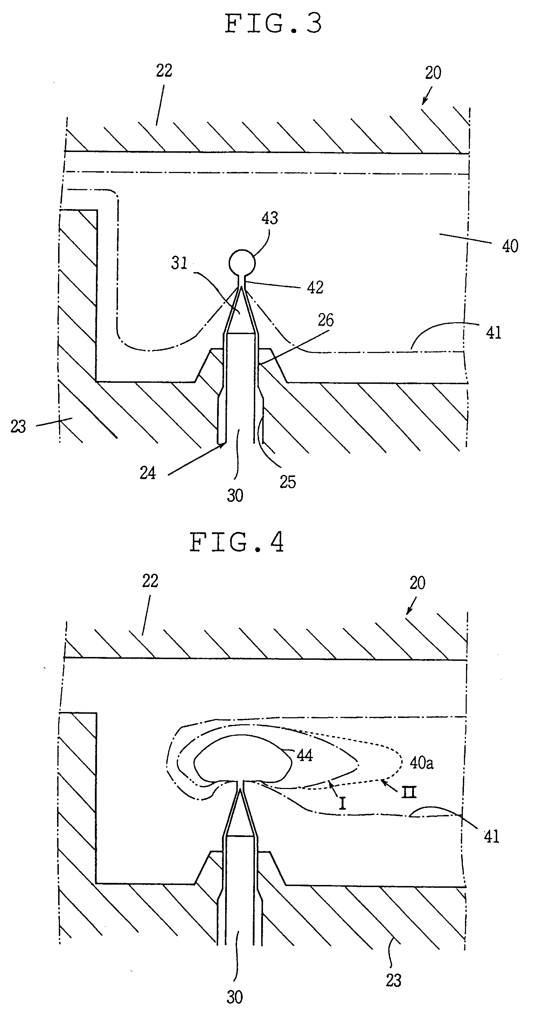

The cavity 21 is charged with resin 40 (Fig. 3), such as polystyrene, polypropylene, ABS or polycarbonate, injected by an injection molding machine. In particular, the present invention is effective to mold polypropylene or ABS having a large mold shrinkage.

In Figs. 3 and 4, hatching for the resin is omitted for the convenience of explanation.

Immediately after the filling of the resin, when the valve 29 is opened and gas such as nitrogen or air at a room temperature is supplied to the holes 24 at a low pressure from the source 27 passing through the passages 28. The gas passes to the tip of each of the void inducing members 30 passing through a clearance between the small diameter portion 26 and the void inducing member 30, peeling a skin layer 41 of the resin 40 from the member 30. Since the tip of the member 30 has a small cooling efficiency, the formation of the skin layer 41 around the tip delays compared with other portions as shown in Fig. 3 Consequently, the skin layer 41 is easily broken by the gas, so that a hole 42 and void nucleus 43 are formed in the resin 40 and the gas is released to the atmosphere through the valve 29. The gas supply is stopped at that time.

As the resin is cooled and solidified, the void nucleuses 43 are expanded by the shrinkage force of the resin 40 to voids 44 as shown in Fig. 4. The void 44 develops as shown by reference I and II to a molten resin 40a which remains molten because of delay of cooling and solidifying. When the resin is completely solidified, the mold 20 is opened to take out the molding. No sink marks are formed on the surface of the molding owing to the voids in the molding. If the application of the gas pressure is continued to the end of the solidification without releasing, the development of the void is enhanced, since the gas pressure is added to the shrinkage force of the resin. Thus, the developed voids prevent sink marks from generating at a peripheral portion of the heavy sections.

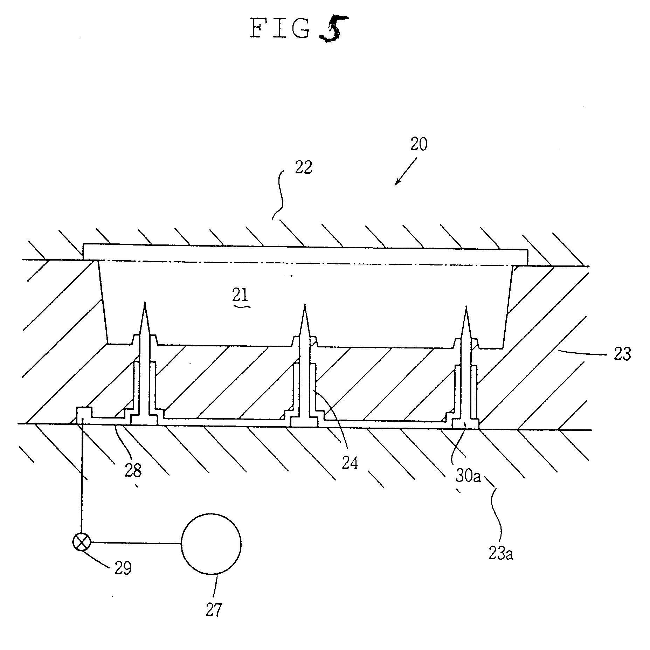

Fig. 5 shows further another example of the void inducing member. Each void inducing member 30a is secured to a holding plate 23a fixed to the movable mold 23. The passage 28 for supplying a gas pressure is formed between the mold 23 and the holding plate 23a and communicated with the hole 24 at the bottom thereof. Function of the void generating member 30a is the same as the member 30 of Fig. 2.

### EXAMPLE I

The molding had a shape shown in Fig. 1, where the rib 12 had a length of 230mm and a thickness of 10mm, and the flange 11 had a thickness of 3mm. The mold 20 of Fig. 2 was used, where three void inducing members 30 were disposed at an interval of 100mm. Each member had a diameter of 2mm. Molten polystyrene was injected in the cavity 21 of the mold. Immediately after dwelling for three seconds, compressed air of 9.32 Bar (9.5 kg/cm²) at a room temperature was applied to the tip of each void inducing member 30 for eight seconds. Then, the air was discharged to the atmosphere by opening the valve 29. The resin was cooled and solidified under the open condition of the passage 28. After 60 seconds cooling, the molding was taken out from the mold. At that time, a hole of 0.5 mm diameter and a comparatively large void communicated with the hole were found about the tip end of each void inducing member. When the surfaces of the injection molding obtained were investigated, no defect such as sink marks was detected on the surface of the molding.

### COMPARATIVE EXAMPLE (1) - (3)

Following experiments were conducted in order to verify the effect of the method of the present invention.
(1) The mold of Fig. 2 was used and polystyrene was molded under the same conditions as the Example I without supplying a gas pressure. Void was not generated in the molding around the tip of each void inducing member. Remarkable sink marks generated on the surface of the molding corresponding to the rib as well as on the side of it. The molding was inferior in surface quality.
(2) A cylindrical pin made of steel (K-4) having a 6 mm diameter was used as a void inducing member to control the generation of void. An injection molding was performed in the same conditions as the Example I. However, no void was generated and remarkable sink marks were detected, resulting in poor surface quality as an article. Although other resins such as ABS, polycarbonate and PMMA were molded, the results were the same.
(3) Pressurized gas was applied to the mold during the three seconds dwelling under the same conditions as the Example I. When the process entered in the cooling step, the gas supply was stopped and discharged through the valve 29. The resin in the mold was cooled and solidified in the condition that the passage 28 for the pressurized gas is opened to the atmosphere. There was no void formation in the molding, and hence remarkable sink marks generated, resulting also in poor surface quality as an article.

In another experiment, gas pressure was applied before the completion of the charging of the resin and up to the dwelling under the same conditions as the Example 1. Even when the polystyrene was cooled and solidified in the state where the gas supply and was stopped at the beginning of the cooling step, a plurality of sink marks generated, resulting in poor surface quality as a product.

### EXAMPLE II (1) - (2)

(1) Under the same conditions as the EXAMPLE I, various experiments were conducted where the gas pressure applying time was changed during the cooling period at every experiment in order to investigate the relationship between the gas pressure applying time and the size of the void formed in the molding.

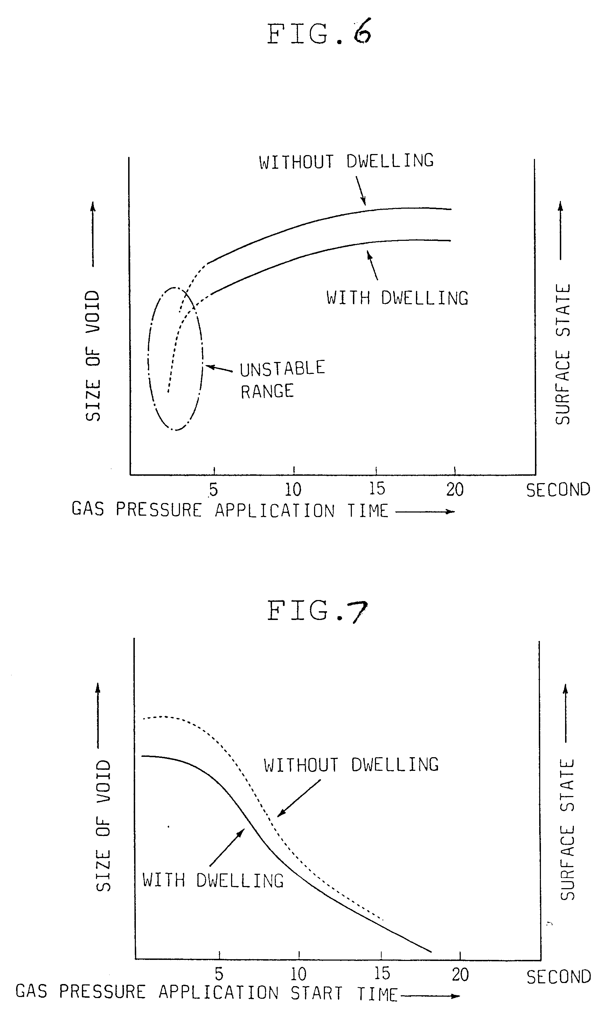

   Fig. 6 shows the relationship. From the graph, it is found that the void nucleus is formed within five seconds after the start of the gas pressure application. The size of the void increases with the gas pressure application time. When the surface state of the resin molding was observed in detail, it is improved as the size of the void increases.
(2) If the gas pressure was applied to the cavity immediately after polystyrene was completely injected without dwelling, the size of the void became larger than the size of the void with dwelling, and the surface state was further improved. Thus, it was
   verified that the dwelling was not always required.
The weight of the injected product with the dwelling was 133.9g and was 131.2g without dwelling.
Gas pressure application did not make any change in weight of the product.

### EXAMPLE III (1) - (3)

(1) The molding had a similar shape to the molding of Fig. 1. The flange had a thickness of 2mm, and the rib had a thickness of 6mm and a length of 230mm. Although the thickness of the rib was considerably smaller than the Example I , remarkable sink marks were generated on the surface of the flange corresponding to the rib when the molding was produced by the conventional molding method. Accordingly, three void inducing members, each having a diameter of 2mm, were mounted on the movable mold of the mold for injection molding at an interval of 100mm.
   An injection molding was performed using this mold by setting the cooling time to 40 seconds, and other conditions were the same as the Example I. In the molding, it was verified that voids, each void communicated with the through hole having a diameter of 0.5 mm, were formed on the tip of each void inducing member. When the surface state of this molding was investigated, any defect such as sink marks was not found on the surface of the molding, as the case of the Example I.
(2) In another experiment, gas pressure was applied to only the left member 30b of Fig. 2, other conditions were the same as Example I. In the molding, no sink marks were generated on the surface portions 14 and 15 of Fig. 1. However, some sink marks were generated on the surface portion 16.
(3) When dwelling was omitted and the gas pressure was applied until the end of the cooling period in the above two examples, sink marks were not found at all on the surface portion 16.

### EXAMPLE IV

In the Examples I through III, the gas pressure was applied to the tip end of the void inducing member immediately after the start of the cooling period. The relationship between the delay time starting the gas pressure application at different times and the size of voids formed and surface quality was compared in the same conditions as the Example II. Fig. 7 shows the relationship between the gas pressure application start time and size of the void. From the graph, it is found that when the development of resin solidifying layer is performed before the development of the void, the shrinkage of resin, causing sink marks, cannot be compensated by the void, resulting in insufficient improvement of the surface state.

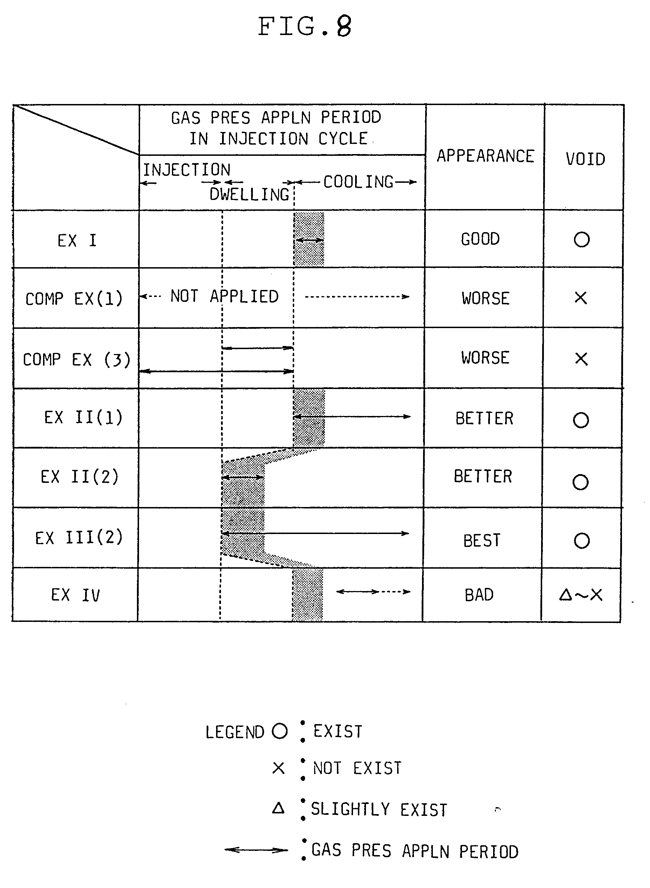

Fig. 8 shows results of the Examples I through IV and the Comparative Example.

### EXAMPLE V

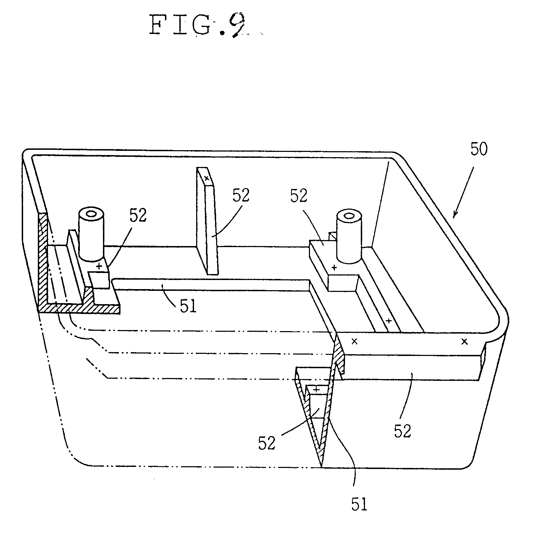

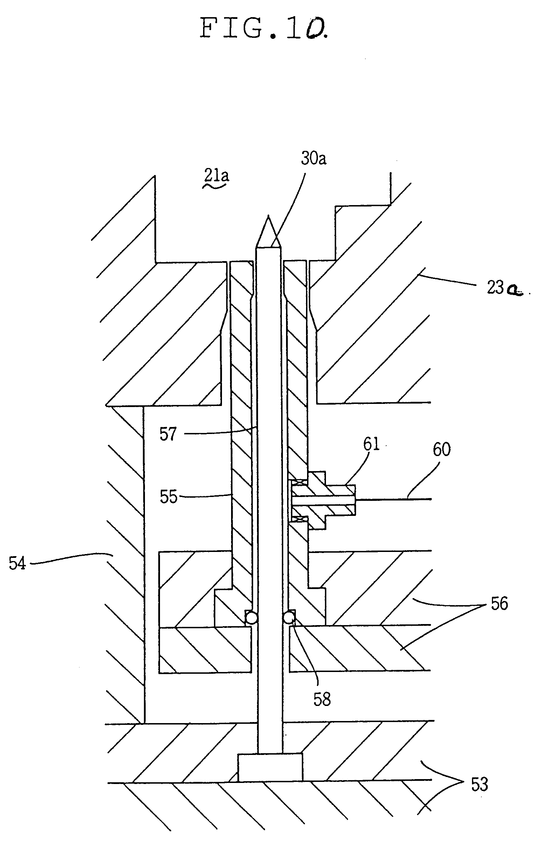

Fig. 9 shows a molding 50 having a complicated shape. The molding comprises thinner sections 51 and heavy sections 52. When manufacturing a molding 50 having a shape with the different thickness, in the heavy sections 52, void inducing members were provided in the cavity of a mold corresponding to the positions indicated by marks x and +. When the gas pressure was applied immediately after injecting the molten resin into the mold cavity, a product could be obtained after the completion of cooling, which was excellent in appearance without having any defect such as sink mark on the surface despite of the complicate form of the product. At each position designated by the mark x, the void inducing member 30a of Fig. 10 was set. The void inducing member 30a was attached by an attaching device shown in Fig. 10.

The void inducing member 30a is mounted to a bottom plate 53 which is secured to a core plate 23a through a spacer block 54. The member 30a is mounted in a sleeve 55 which is supported by an ejector plate 56. Between the member 30a and the sleeve 55, a gas passage 57 is formed to be communicated with the tip end of void inducing member in the mold 23a. The passage 57 is sealed by an O-ring 58. The pressurized gas is applied to the cavity 21a through the pipe 60, a connector 61 and passage 57.

The attaching device of Fig. 11 enables the void generating member to be easily attached to a mold having a complicated shape.

Gas pressure was applied to each void inducing member immediately after the injection of the resin. In spite of the complicated molding, a product having an excellent appearance was obtained. The void inducing member may also act as an ejector for ejecting the product from the mold.

In accordance with the present invention, foams as a void nucleus are formed on the tip of a void inducing member in the injected resin. This void nucleus develops to voids as the resin shrinks when solidified at cooling. Thus, a product having a good appearance without sink marks can be obtained. Since gas pressure having a low pressure is applied to the void inducing member, the injection molding can be easily performed with an injector having a simple construction.

While the presently preferred embodiment of the present invention has been shown and described, it is to be understood that these disclosures are for the purpose of illustration and that various changes and modifications may be made without deviating from the scope of the invention as set forth in the appended claims.

## Claims

1. An injection molding method for manufacturing a thermoplastic part having thick (12) and thin (11) wall portions and having a surface appearance which is free from sink marks,
said method comprising the steps of providing for the or each thick wall portion at least one void inducing member (30) having an acute tip (31) at one end thereof, said member being positioned corresponding to the thick wall portion such that the tip is located in the cavity (21) of the mold;
injecting molten resin into the cavity in an amount sufficient to fill the cavity;
supplying compressed gas along the or each void inducing member (30) to the acute tip (31) thereof thereby causing a resin skin layer (41) formed in contact with the acute tip to be penetrated by said gas and a void nucleus (43) to be induced in the molten resin (40) and
cooling and solidifying the resin causing the void nucleus to expand with the ingress of gas to a large void (44) in response to volumetric shrinkage of the resin by the shrinkage force of the resin;
characterized in that the compressed gas is supplied along the periphery of the or each void inducing member (30).

2. An injection molding method as claimed in claim 1 wherein the compressed gas is supplied immediately after completion of filling of the entire cavity (21) with resin (40).

3. An injection molding method as claimed in claim 1 or 2 wherein the supply of compressed gas is stopped before the end of the cooling step and the cooling step continues with the resin exposed to the atmosphere.

4. An injection molding method as claimed in claim 1 wherein the compressed gas is supplied after a delay following completion of filling of the entire cavity with resin.

5. An injection molding method as claimed in any preceding claim wherein the pressure of the compressed gas is in the range 4.90-14.71 Bar (5-15 kg/cm²).

6. A mould for injection moulding a thermoplastic part having thick (12) and thin (11) wall portions and having a surface appearance which is free from sink marks, said mould having a cavity (21) defining the thermoplastic part;
for the or each thick wall portion at least one void inducing member (30), the member being positioned corresponding to the thick wall portion such that an acute tip (31) at one end of the member is located in the cavity (21) of the mould and
passage means (24,25,26;57) for supplying gas under pressure along the member to the tip (31) thereof;
characterized in that the passage means (24,25,26;57) are situated along the periphery of the member (30).

## Patentansprüche

1. Spritzgießverfahren zur Herstellung eines thermoplastischen Teils mit dicken (12) und dünnen (11) Wandteilen und einem Oberflächenaussehen, das frei von Einfallstellen ist,
bei dem man für den oder jeden dicken Wandteil wenigstens ein Hohlraum induzierendes Element (30) mit einer scharfen Spitze (31) an seinem einen Ende vorsieht, wobei das Element entsprechend dem dicken Wandteil so angeordnet ist, daß sich die Spitze in dem Hohlraum (21) der Form befindet,
geschmolzenes Harz in den Hohlraum in einer zu seiner Ausfüllung ausreichenden Menge einspritzt,
komprimiertes Gas der scharfen Spitze (31) längs des oder jedes Hohlraum induzierenden Elements (30) zuführt und dadurch verursacht, daß eine in Berührung mit der scharfen Spitze gebildete Harzhautschicht (41) von dem Gas durchdrungen und in der Harzschmelze (40) ein Hohlraumkern (43) hervorgerufen wird, und
das Harz abkühlt und und festwerden läßt und den Hohlraumkern veranlaßt, in Reaktion auf die volumetrische Schrumpfung des Harzes durch dessen Schrumpfkraft mit dem Gaseintritt zu einem großen Hohlraum (44) zu expandieren,
dadurch gekennzeichnet, daß das komprimierte Gas längs des Umfangs des oder jedes Hohlraum induzierenden Elements (30) zugeführt wird.

2. Spritzgußverfahren nach Anspruch 1, bei dem man das komprimierte Gas unmittelbar nach Beendigung der Füllung des ganzen Hohlraums (21) mit Harz (40) zuführt.

3. Spritzgußverfahren nach Anspruch 1 oder 2, bei dem man die Zuführung des komprimierten Gases vor dem Ende der Kühlstufe einstellt und die Kühlstufe bei der Atmosphäre ausgesetztem Harz fortsetzt.

4. Spritzgußverfahren nach Anspruch 1, bei dem man das komprimierte Gas nach einer Verzögerungszeit nach Beendigung der Füllung des ganzen Hohlraums mit Harz zuführt.

5. Spritzgußverfahren nach einem vorhergehenden Anspruch, bei dem der Druck des komprimierten Gases in dem Bereich 4,90 bis 14,71 Bar (5-15 kg/cm²) liegt.

6. Form zum Spritzgießen eines thermoplastischen Teils mit dicken (12) und dünnen (11) Wandteilen und einem von Einfallstellen freien Oberflächenaussehen sowie einem das thermoplastische Teil begrenzenden Hohlraum (21),
wenigstens einem Hohlraum induzierenden Element (30) für den oder jeden dicken Wandteil, das entsprechend dem dicken Wandteil so angeordnet ist, daß sich eine scharfe Spitze (31) an einem Ende des Elements in dem Hohlraum (21) der Form befindet und
Kanaleinrichtungen (24,25,26;57) für die Zuführung von Gas unter Druck längs des Elements zu dessen Spitze (31),
dadurch gekennzeichnet, daß die Kanaleinrichtungen (24,25,26;57) längs des Umfangs des Elements (30) angeordnet sind.

## Revendications

1. Procédé de moulage par injection pour fabriquer une pièce en matière thermoplastique ayant des portions de paroi épaisses (12) et minces (11) et ayant un aspect superficiel qui est dépourvu de flaches,
ledit procédé comprenant les étapes consistant à fournir pour la, ou pour chaque, portion de paroi épaisse au moins un élément induisant un vide (30) ayant une pointe aiguë (31) à l'une de ses extrémités, ledit élément étant placé en correspondance avec la portion de paroi épaisse de telle sorte que la pointe se situe dans le creux (21) du moule ;
à injecter une résine fondue dans le creux en une quantité suffisante pour remplir le creux ;
à introduire un gaz comprimé le long de, ou le long de chaque, élément induisant un vide (30) jusqu'à sa pointe aiguë (31), entraînant ainsi la pénétration d'une couche pelliculaire de résine (41) formée en contact avec la pointe aiguë par ledit gaz et la formation d'un noyau de vide (43) dans la résine fondue (40), et
à refroidir et à solidifier la résine, entraînant l'expansion du noyau de vide, l'introduction du gaz dans un grand vide (44) se faisant en réponse au retrait volumique de la résine par la force de retrait de la résine ;
caractérisé en ce que le gaz comprimé est introduit le long de la périphérie du, ou de chaque, élément induisant un vide (30).

2. Procédé de moulage par injection selon la revendication 1, dans lequel le gaz comprimé est introduit immédiatement après l'achèvement du remplissage de tout le creux (21) par la résine (40).

3. Procédé de moulage par injection selon la revendication 1 ou 2, dans lequel l'introduction du gaz comprimé est arrêtée avant la fin de l'étape de refroidissement, et l'étape de refroidissement se poursuit pendant que la résine est exposée à l'atmosphère.

4. Procédé de moulage par injection selon la revendication 1, dans lequel le gaz comprimé est introduit après un certain laps de temps après l'achèvement du remplissage de tout le creux par la résine.

5. Procédé de moulage par injection selon l'une quelconque des revendications précédentes, dans lequel la pression du gaz comprimé se situe dans la gamme de 4,90 à 14,71 bars (5 à 15 kg/cm²).

6. Moule pour le moulage par injection d'une pièce en matière thermoplastique ayant des portions de paroi épaisses (12) et minces (11) et ayant un aspect superficiel qui est dépourvu de flaches, ledit moule ayant un creux (21) définissant la pièce en matière thermoplastique ;
pour le, ou pour chaque, portion de paroi épaisse au moins un élément induisant un vide (30), l'élément étant placé en correspondance avec la portion de paroi épaisse de telle sorte qu'une pointe aiguë (31) à une extrémité de l'élément se situe dans le creux (21) du moule, et
des moyens de passage (24, 25, 26, 57) pour introduire un gaz sous pression le long de l'élément jusqu'à sa pointe (31) ;
caractérisé en ce que les moyens de passage (24, 25, 26, 57) se situent le long de la périphérie de l'élément (30).
